# EUROPEAN PATENT SPECIFICATION

(11) **EP 3 829 318 B1**
(45) Date of publication and mention of the grant of the patent: **25.09.2024**
(21) Application number: 19843893.9
(22) Date of filing: 02.08.2019
(51) Int. Cl.: A23G 9/28, A23G 9/22, G06Q 20/18, G07F 13/10, G07F 17/00

(54) **A ROBOTIC ICE CREAM DELIVERY SYSTEM**
ROBOTISCHES EISCREMEABGABESYSTEM
SYSTÈME ROBOTISÉ DE DISTRIBUTION DE CRÈME GLACÉE

(30) Priority: 03.08.2018 AU 2018902828
(43) Date of publication of application: 09.06.2021
(73) Proprietor: Niska Retail Robotics Pty Ltd, Sydney, New South Wales 2000 (AU)
(72) Inventor: TUMINO, David, New South Wales 2000 (AU); MYLES, Campbell, New South Wales 2000 (AU); TANUWIDJAJA, Deny, 2000 (AU); ORLOVA, Ekaterina, 2000 (AU); MORUS, Anton, New South Wales 2000 (AU)
(74) Representative: Vesterinen, Jussi Tapio
(86) International application number: PCT/AU2019/050812
(87) International publication number: WO 2020/024018

(56) References cited:
- EP-A1- 2 581 885
- EP-A1- 3 333 815
- WO-A2-2015/125017
- IT-A1- MC20 070 020
- US-A1- 2011 268 831
- US-A1- 2017 290 454
- ZHIXING XUE; STEFFEN W RUEHL; ANDREAS HERMANN; THILO KERSCHER; RUEDIGER DILLMANN: "Autonomous grasp and manipulation planning using a ToF camera", ROBOTICS AND AUTONOMOUS SYSTEMS, vol. 60, no. 3, 2012, pages 387 - 395, XP028446035, ISSN: 0921-8890, DOI: 10.1016/j.robot.2011.07.012
- ANONYMOUS: "Prestige Ice Cream Scoop - PR9622", 22 June 2016 (2016-06-22), pages 1 - 4, XP055782688, Retrieved from the Internet <URL:https://yaoota.com/en-sa/product/prestige-ice-cream-scoop-pr9622-price-from-kingsouq-saudi-arabia> [retrieved on 20190919]
- ANONYMOUS: "Cube Ice Cream Scoop", 18 August 2011 (2011-08-18), pages 1 - 3, XP055782692, Retrieved from the Internet <URL:https://www.jbprince.com/utensils/cube-ice-cream-scoop-cube-3.asp> [retrieved on 20190918]
- JONATHAN BLUTINGER , TRACIE BROWN , CHRISTIE CAPPER , CHAD TARPLEY : "Scoop: Automating the Ice Cream Scooping Process", 1 December 2016 (2016-12-01), pages 1 - 4, XP055683598, Retrieved from the Internet <URL:http://www.jonathanblutinger.com/img/Group8-Scoop.pdf> [retrieved on 20180912]

## Description

### Field of the Invention

This invention relates to a self-serve kiosk system for the delivery of ice cream, comprising a robotic arm. The invention is defined in the appended claims.

### Background of the Invention

Devices for preparing and delivering a cone or cup of ice cream include EP 3333815 A1 (Ilventitre S.r.L) 13 June 2018 [hereinafter referred to as D1] which comprise a first robotic arm having a spoon which scoops ice cream from an ice cream tub and which deposits the scooped ice cream into a cup or cone held by a second robotic arm for delivery.

Publication "Autonomous grasp and manipulation planning using a ToF camera" by Zhixing Xue et al. introduces methods for sensor calibration and 3D data segmentation to use a time-of-flight camera to automatically plan grasps and manipulation actions for a service robot.

The present invention seeks to provide a system, which will overcome or substantially ameliorate at least some of the deficiencies of the prior art, or to at least provide an alternative.

It is to be understood that, if any prior art information is referred to herein, such reference does not constitute an admission that the information forms part of the common general knowledge in the art, in Australia or any other country.

### Summary of the Disclosure

There is provided herein a self-serve kiosk system comprising a controller interfacing an order configuration interface and a scoop subsystem comprising a robotic arm having a scoop mechanism at a distal end thereof.

The scoop mechanism is of a particular configuration in that the scoop mechanism comprises a scoop defining an interior volume and a coplanar rim about the interior.

Furthermore, the controller is configured to control the robotic arm in a particular manner to position the scoop mechanism in relation to an ice cream container in accordance with an order received via the order configuration interface, to lower the scoop mechanism into the ice cream container, to stroke the scoop across the ice cream container until such time that the coplanar rim hits flat against an opposing inner side wall surface of the container thereby entrapping a fixed volume of ice cream between the opposing inner side wall surface and the interior of the scoop, to raise the scoop mechanism to wipe the coplanar rim of the opposing inner side wall surface to withdraw the fixed volume of ice cream from the ice cream container and to position the scoop with respect to a disposable cup or cone to deposit the fixed volume of ice cream therein.

The scoop mechanism comprises a wiper actuator driving a wiper across an inner surface of the scoop and the controller may to actuate the wiper mechanism to dislodge the fixed volume of ice cream from the scoop into the cup or cone

As such, the present scoop mechanism allows for single robotic arm operation as opposed to the device of D1, for example, requiring first and second robotic arms.

Furthermore, in embodiments the scoop mechanism comprises a rack and pinion, a pinion thereof being connected to a wiper and an aperture through which a slider rod is slidably retained and which bears against a bearing face of a rack of the rack and pinion to oppose a biasing spring and which extends from the aperture. As such, in use, when the scoop mechanism is moved to press a distal end of the slider rod against a surface, the slider rod slides into the aperture, thereby deflecting the rack, causing the pinion to rotate to move the wiper to dislodge the ice cream. As such, the present arrangement may allow for single robotic arm operation as opposed to the required first and second robotic arms of D1 for example.

Furthermore, the present scoop mechanism allows for tight and repeatable control of the fixed volume of ice cream unlike the device of D1, for example, wherein the amount of ice cream scooped may vary considerably. D1 does not disclose or obviously suggest a scoop having a coplanar rim, let alone hitting the coplanar rim against the opposing inner side wall surface of the container.

In embodiments the rim comprises a horizontal straight lower edge, thereby allowing the cleaning of the planar floor of the container. In further embodiments, the rim comprises side edges perpendicular to the lower edge, thereby allowing cleaning of the side walls of the container.

The scoop may comprise an upward curvature rearward from the horizontal straight lower edge and the length of the stroke may be configured such that the interior volume of the scoop is filled with ice cream when hitting the opposing inner side wall surface of the container.

In embodiments the controller may reference a pressure sensor of the robotic arm to lower the scoop mechanism until the scoop mechanism contacts an upper surface of ice cream within the container. Furthermore, the controller may reference the pressure sensor to apply a minimum amount of downward pressure during the stroke, thereby ensuring the scoop is adequately filled with ice cream.

In further embodiments, the controller may record each stroke to record real-time real-time ice cream content topography data within each container.

As such, the controller may lower the scoop mechanism in accordance with the real-time ice cream content topography data. Furthermore, the controller may move the scoop mechanism adjacently according to the real-time ice cream content topography data such that the container is scooped out in rows.

The present kiosk may comprise a rotary cassette having a plurality of ice cream containers within a bin, which may be selectively enclosed by an automatic lid. As such, in accordance with a customer order, the controller may open the bin lid and rotate the rotary cassette to position the correct ice cream container for scooping.

In embodiments the kiosk may comprise two or more bins and the robotic arm may move along a rail between each bin.

The kiosk may comprise a delivery subsystem to deliver the laden cone or cup to the user and a rinse station to rinse residual ice cream from the scoop between each stroke.

According to the invention, there is provided a self-serve kiosk system as recited in claim 1.

The inner surface of the scoop may be semi-cylindrical and the wiper may have a curvature and rotates between upper and lower pivot points across the inner surface of the scoop.

The scoop mechanism may comprise a neck having the scoop at a distal end thereof and the scoop mechanism may comprise a driveshaft along the neck to the upper pivot point.

The rim may comprise a horizontal straight lower edge.

The scoop may comprise an upward curvature rearward from the horizontal straight lower edge.

The rim may comprise side edges perpendicular to the lower edge.

The scoop mechanism may comprise a neck having the scoop at a distal end thereof and the coplanar rim may be away from an adjacent edge of the neck.

The coplanar rim may lie in a plane being parallel with an elongate axis of the neck.

The robotic arm may comprise a pressure sensor and the controller may be configured for lowering the scoop mechanism until such time that the pressure sensor indicates that the scoop contacts an upper surface of the ice cream within the ice cream container.

During the stroke, the controller may be configured to reference the pressure sensor to control the robotic arm to maintain a minimum downward pressure on the scoop.

The controller may record each stroke to record real-time ice cream content topography data such that the controller may lowers the scoop mechanism according to the ice cream content topography data.

The length of the stroke may be configured according to the interior volume of the scoop such that the interior volume may be filled with ice cream at the opposing inner side wall surface.

The controller may record each stroke to record real-time ice cream content topography data and the controller adjacently positions the scoop mechanism according to the ice cream content topography data.

The system may comprise a rotating cassette of containers and the controller may be configured for rotating the cassette according to the order.

The cassette may be housed within a bin and the bin may comprise a lid and a lid actuator and the controller may be configured for rotating the cassette according to the order to position one of the containers beneath the lid and to actuate the lid actuator to open the lid.

The system may further comprise a further rotating cassette of containers and the robotic arm may be able to travel along a rail and the controller may be configured for positioning the robotic arm along the rail to access the rotating cassette and the further rotating cassette.

The scoop mechanism may comprise a rack and pinion, a pinion thereof being connected to the wiper and an aperture through which a slider rod may be slidably retained and which bears against a bearing face of a rack of the rack and pinion to oppose a biasing spring and which extends from the aperture such that, in use, when the scoop mechanism is moved to press a distal end of the slider rod against a surface, the slider rod slides into the aperture, thereby deflecting the rack, causing the pinion to rotate to move the wiper.

Other aspects of the invention are also disclosed.

### Brief Description of the Drawings

Notwithstanding any other forms which may fall within the scope of the present invention as defined in the appended claims, preferred embodiments of the disclosure will now be described, by way of example only, with reference to the accompanying drawings in which:

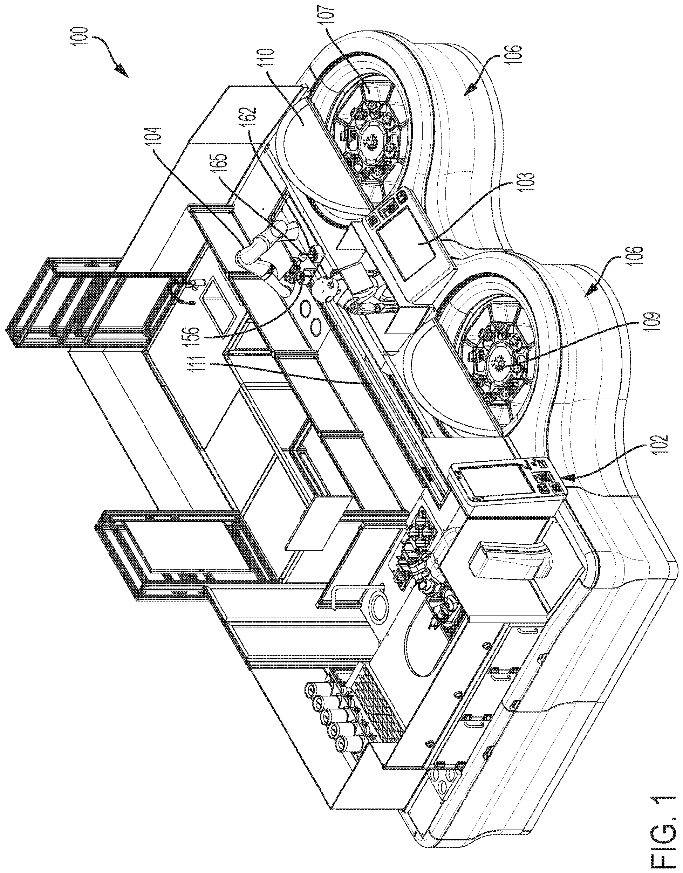

Figure 1 shows a self-serve kiosk in accordance with an embodiment;

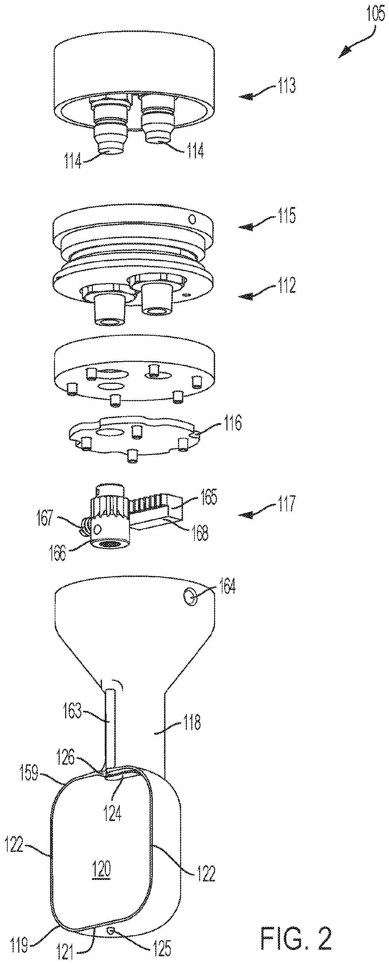

Figure 2 shows an exploded perspective view of a scoop mechanism in accordance with an embodiment;

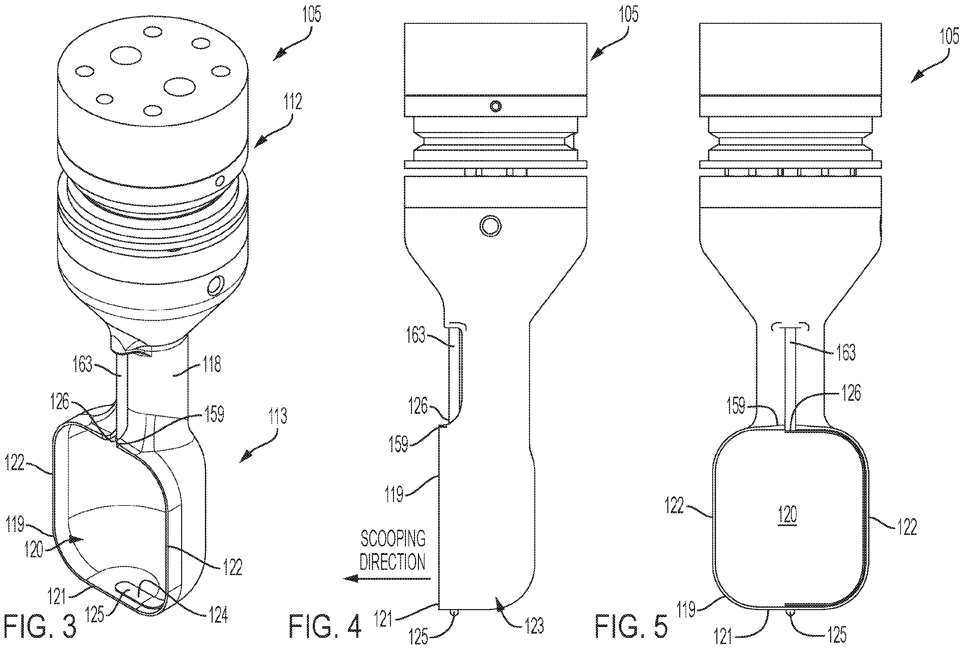

Figure 3 shows a top perspective assembled view of the scoop mechanism;
Figure 4 shows a side elevation view of the scoop mechanism;
Figure 5 shows a front elevation view of the scoop mechanism;
Figure 6 shows a kiosk system in accordance with an embodiment;
Figure 7 shows exemplary processing by the system in accordance with an embodiment; and
Figures 8 - 10 illustrate a scooping manoeuvre in accordance with an embodiment.

### Description of Embodiments

A self-serve kiosk system 100 may comprise a POS system 102 and comprises an order configuration interface 103.

The kiosk system 100 comprises a robotic arm 104 having a scoop mechanism 105 at a distal end thereof. The kiosk system 100 may comprise at least one bin 106 having a plurality of ice cream containers 107 therein.

Each bin 106 may comprise a rotating cassette 109 holding a plurality of ice cream containers 107 and a rotary actuator 108 to rotate the cassette 109. Each bin 106 may comprise a bin lid 110 and a bin lid actuator 143 to open the bin lid 110. The robotic arm 104 may travel along a rail 111 between adjacent bins 106.

The scoop mechanism 105 may comprise a robotic arm interface 112 and comprises a scoop 113 at a distal end thereof. The robotic arm interface 112 may interface with a robotic arm mating interface 113 of the robotic arm 104. The robotic arm mating interface 113 may comprise a plurality of rotary actuators 114.

The robotic arm interface 112 may comprise a coupling device 115 interfacing the robotic arm mating interface 113.

A neck 118 may interface the scoop 113 and the robotic arm interface 112.

The scoop 113 may have a coplanar rim 119 round an interior volume 120. The rim 119 may comprise a horizontal straight lower edge 121. Furthermore, the coplanar rim 190 may comprise straight side edges 122 being perpendicular to the horizontal straight lower edge 121.

The coplanar rim 119 may be in front of an adjacent edge of the neck 118 such that the rim 119 may hit an opposing inner side wall surface of the container in the manner described hereunder without interference from the neck 118. Furthermore, the coplanar rim 119 may lie in a plane being parallel with an elongate axis of the neck 118,

The scoop 130 may comprise an upward curvature 123 rearward from the horizontal straight lower edge 121.

The scoop mechanism 105 comprises a wiper mechanism comprising a wiper 124. The scoop 113 may comprise a semi cylindrical inner surface and the wiper 124 may have a curvature and may be pivotally coupled between lower and upper pivot points 125, 126.

A driveshaft 163 may interface a rack and pinion 117 held by a rack retaining plate 116 to rotate the wiper 124 between the pivot points 125, 126 such that the wiper wipes closely against and inner surface of the interior volume 120 of the scoop 113.

The scoop mechanism 105 may further comprise a rotary actuator 142 so as to be able to rotate the scoop 113 along and elongate axis of the neck 113 with respect to the robotic arm mating interface 113.

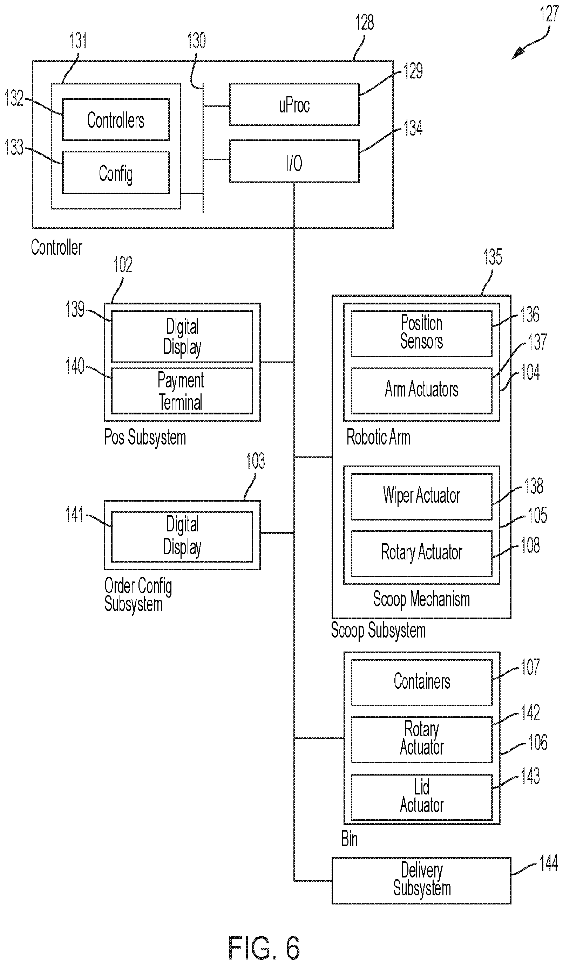

Figure 6 shows a control system 127 which comprises a controller 128. The controller 128 comprises a microprocessor 129 for processing digital data. In operable communication with the processor 129 across a system bus 130 is a memory device 131. The memory device 131 is configured for storing digital data, including computer program code instructions which, in use, are fetched, decoded and executed by the microprocessor 129 for implementing the functionality described herein.

The computer program code instructions may be logically divided into various controllers 132. The memory device 131 may further comprise configuration data 133. As such, the controllers 132 control the operation of the controller 128 in accordance with the configuration data 133.

The controller 128 further comprises an I/O interface 134. The I/O interface 134 may interface with a scoop subsystem 135 which may comprise the robotic arm 104 and the scoop mechanism 105.

The robotic arm 104 may comprise position sensors 136 and arm actuators 137. The arm actuators 137 may position the robotic arm in various positions.

The scoop mechanism 105 may comprise an aperture 164 through which a slider rod (not shown) is retained and bears against a bearing face 165 of the rack 168 against a biasing spring 167. In accordance with this embodiment, the controller 128 may manoeuvre the scoop mechanism 105 to press the slider rod against a surface, causing the rod to slide into the aperture 164 and move the rack 168 against the biasing spring 167 to rotate the pinion 166 to wipe the wiper 124.

In alternative embodiments, the scoop mechanism 105 may comprise a rotary actuator 108 and the wiper actuator 138.

The I/O interface 134 may further interface with the POS subsystem 102. The POS subsystem 102 may comprise a digital display 139 for the display of digital data thereon. A haptic overlay may interface the digital display 139 so as to be able to receive user input with respect to the information displayed by the digital display 139. The POS subsystem 102 may further comprise a payment terminal 140 configured for receiving payment, typically by way of contactless payment in the manner known in the art.

The I/O interface 134 may further interface the order configuration subsystem 103. The order configuration subsystem 103 may similarly comprise a digital display 141 for the display of information thereon and which may similarly comprise a haptic overlay allowing the user to configure paid for orders.

The I/O interface may further interface a rotary actuator 142 to rotate the cassette 109 of containers 107 within each bin 106. Furthermore, the I/O interface 134 may interface with a lid actuator 143 to open and close the bin load 110.

The I/O interface 134 may further interface the delivery subsystem 144 for the delivery of an order to a customer.

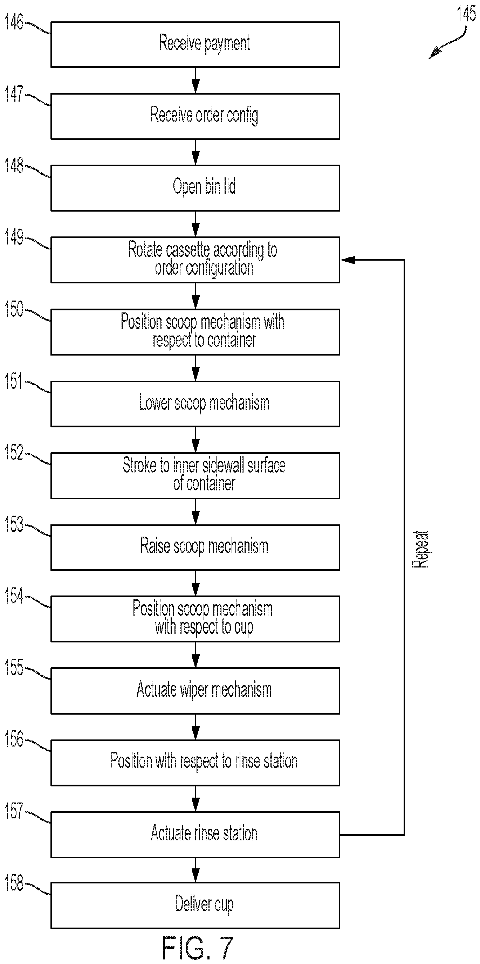

Figure 7 illustrates exemplary processing 145 implemented by the system 127.

The processing 145 comprises receiving payment at step 146 via the POS subsystem 102 followed by receiving an order configuration at step 147 via the order configuration subsystem 103. For example, using various prompts on the digital display 141 of the order configuration subsystem 103, the user may order a cup of ice cream comprising a scoop of strawberry flavoured ice cream and a scoop of chocolate flavoured ice cream.

Once the order is placed via the order configuration subsystem 103, the controller 128 may open the bin lid 110 by controlling the lid actuator 143 of the relevant bin 106 at step 148.

The configuration data 133 may comprise ice cream type data for each container 107 within each bin 106. As such, in accordance with the order configuration data, the controller 128 is able to determine which bin 106 comprises the type of ice cream ordered by the customer so as to be able to open the appropriate bin lid 110.

The controller 128 may comprise a setup mode wherein the operator of the kiosk 110 programs in the ice cream contents of each container 107 of each bin 106. Such configuration may be performed using an administrator interface available via the digital display 141 of the order configuration subsystem 103.

The controller 128 may then rotate the cassette 109 according to the order configuration at step 149. Specifically, the controller 128 may control the rotary actuator 142 such that the appropriate container 107 locates beneath the open bin lid 110.

The controller 128 then positions the scoop mechanism 105 with respect to the container 107 at step 150.

The controller 128 may move the robotic arm 104 along the rail 111 between each bin 106 depending on the location of the chosen ice cream container 107.

The controller 128 may position the scoop mechanism 105 above the ice cream container 107.

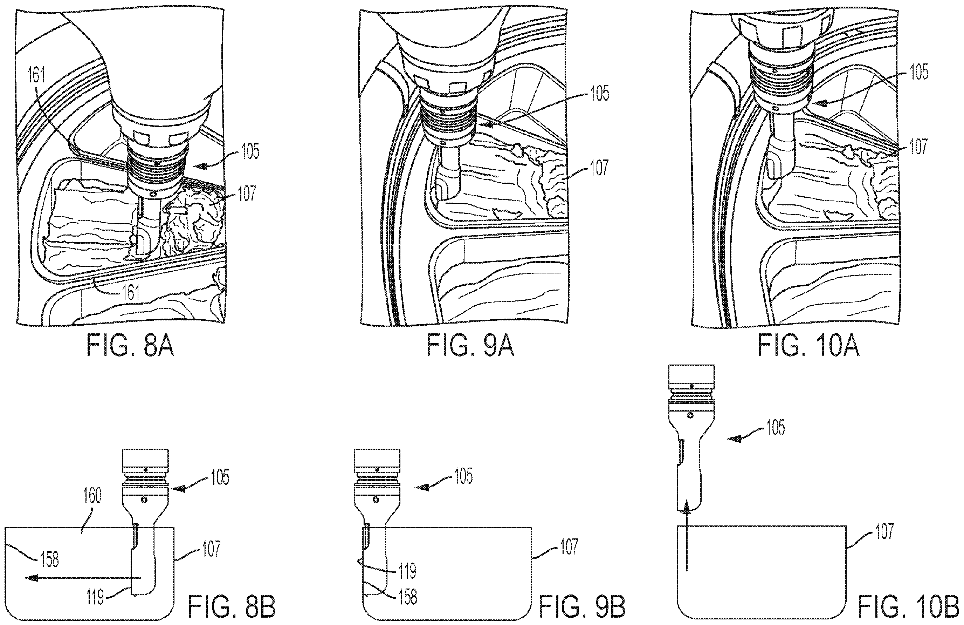

At step 151, the controller 128 lowers the scoop mechanism 105 into the container 107 as is substantially illustrated in Figure 8.

As is illustrated in Figure 8A, each container 107 may be wedge-shaped and may narrow towards the centre point of the container 109. As such, the controller 128 may position the scoop mechanism 105 within the container 107 towards the centre point of the cassette 109.

At step 152, the controller 128 strokes the scoop mechanism 105 across the container 107 towards an opposing planar inner side wall surface 158 of the container 107. As the scoop mechanism 105 is stroked across the container 107, the scoop 113 gathers ice cream within the interior volume 120 thereof.

In the embodiment shown in Figure 8B, the controller 128 may position the scoop 113 such that an upper edge 159 of the rim 119 substantially coincides with an upper surface 160 of the ice cream within the container 107.

Alternatively, the upper edge 159 may locate above the upper surface 160 and wherein the upward curvature rearward from the horizontal straight lower edge 121 may cause ice cream to rise within the interior volume 120 to substantially fill the entire interior volume 120 of the scoop 113.

A length of the stroke may be configured such that the interior volume 120 of the scoop 113 filled entirely with ice cream.

In embodiments, the robotic arm 104 may comprise a pressure sensor. As such, the controller 128 may lower the scoop mechanism 105 until such time that the pressure sensor detects that the scoop 113 contacts the upper surface 160 of the ice cream therein whereafter the controller 128 performs the sideway stroke.

In embodiments, the pressure sensor may be further referenced such that the controller 128 may control the robotic arm 104 to apply a minimum threshold of downward pressure on the scoop 113.

In embodiments, the controller 128 records the stroke to record real-time ice cream content topography data for each container which may be stored within the configuration data 133.

As such, the controller 128 may lower the scoop mechanism 105 according to the real-time ice cream content topography data.

Furthermore, the controller 128 may adjacently position the scoop mechanism 105 at each successive stroke according to the real-time ice cream content topography data such that the ice cream scoop from the container 107 a series of rows between sidewalls 161 of the container 107.

As is illustrated in Figure 9, the controller 128 may stroke the scoop mechanism 105 until such time that the coplanar rim 119 of the scoop 113 hits flat against the opposing inner side wall surface 158, thereby entrapping a fixed volume of ice cream between the inner side wall surface 158 and the interior of the scoop 113.

At step 153, the controller 128 raises the scoop mechanism 105 in the manner shown in Figure 10, thereby withdrawing the fixed volume of ice cream from the ice cream container 107.

At step 154, the controller 128 may position the scoop mechanism 105 with respect to a disposable cup or cone 162.

At step 155, the controller 128 actuates the wiper mechanism such that the wiper 124 wipes across the interior surface of the scoop 113, thereby dislodging the ice cream contents therefrom to fall into the disposable cup 162. As alluded to above, the controller 128 may position the scoop mechanism 105 to depress the slider rod against a pad to deflect the rack 168 to turn the pinion 166 of the rack and pinion mechanism 117 to move the wiper 124.

The controller 128 may then position the scoop mechanism 105 with respect to a rinsing station 156 and actuate the rinsing station 157 at step 157 such as by flushing the scoop 113 with a jet of water to remove residual ice cream therefrom.

Thereafter, the process may be repeated until such time that a number of scoops of chosen ice cream is deposited within the disposable cup 162.

At step 158, the controller 128 controls the delivery mechanism to move the disposable cup to a delivery surface or chute.

The foregoing description, for purposes of explanation, used specific nomenclature to provide a thorough understanding of the invention. However, it will be apparent to one skilled in the art that specific details are not required in order to practise the invention. Thus, the foregoing descriptions of specific embodiments of the invention are presented for purposes of illustration and description. They are not intended to be exhaustive or to limit the invention to the precise forms disclosed as obviously many modifications and variations are possible within the scope of the appended claims. The embodiments were chosen and described in order to best explain the principles of the invention and its practical applications, thereby enabling others skilled in the art to best utilize the invention and various embodiments with various modifications within the scope of the appended claims.

The term "approximately" or similar as used herein should be construed as being within 10% of the value stated unless otherwise indicated.

Whereas ice cream is according to the invention, other viscous food types, not encompassed by the wording of the claims, are envisaged.

## Claims

1. A self-serve kiosk system (100) comprising a controller (128) interfacing an order configuration interface (103) and a scoop subsystem comprising a robotic arm (104) having a scoop mechanism (105) at a distal end thereof, the scoop mechanism (105) comprising a scoop (113) defining an interior volume (120), the scoop (113) comprising a coplanar rim (119) around the interior volume (120) and wherein, in use, the controller (128) is configured for controlling the robotic arm (104) to position the scoop mechanism (105) in relation to an ice cream container (107) in accordance with an order received via the order configuration interface (103), to lower the scoop mechanism (105) into the ice cream container (107), to stroke the scoop (113) across the ice cream container (107) until such time that the coplanar rim (119) hits flat against an opposing inner side wall surface (158) of the container (107) thereby entrapping a fixed volume of ice cream between the inner side wall surface (158) and the interior of the scoop (113), to raise the scoop (113) to wipe the coplanar rim (119) up the opposing inner side wall surface (158) to withdraw the fixed volume of ice cream from the ice cream container (107) and to position the scoop (113) with respect to a receptacle to deposit the fixed volume of ice cream therein, wherein the scoop mechanism (105) further comprises a wiper (124) moveable across an inner surface of the scoop (113) and wherein the controller (128) is further configured to actuate the wiper (124) to dislodge the fixed volume of ice cream from the scoop (113) into the receptacle.

2. A system (100) as claimed in claim 1, wherein the inner surface of the scoop (113) is semi-cylindrical and wherein the wiper (124) has a curvature and rotates between upper and lower pivot points (126, 125) across the inner surface of the scoop (113).

3. A system (100) as claimed in claim 2, wherein the scoop mechanism (105) comprises a neck (118) having the scoop (113) at a distal end thereof and wherein the scoop mechanism (105) comprises a driveshaft (163) along the neck (118) to the upper pivot point (126).

4. A system (100) as claimed in claim 1, wherein the rim (119) comprises a horizontal straight lower edge (121).

5. A system (100) as claimed in claim 4, wherein the scoop (113) comprises an upward curvature (123) rearward from the horizontal straight lower edge (121).

6. A system (100) as claimed in claim 4, wherein the rim (119) comprises side edges (122) perpendicular to the lower edge (121).

7. A system (100) as claimed in claim 1, wherein the scoop mechanism (105) comprises a neck (118) having the scoop (113) at a distal end thereof and wherein the coplanar rim (119) is away from an adjacent edge of the neck (118).

8. A system (100) as claimed in claim 7, wherein the coplanar rim (119) lies in a plane being parallel with an elongate axis of the neck (118).

9. A system (100) as claimed in claim 1, wherein the robotic arm (104) comprises a pressure sensor and wherein the controller (128) is configured for lowering the scoop mechanism (105) until such time that the pressure sensor indicates that the scoop (113) contacts an upper surface (160) of the ice cream within the ice cream container.

10. A system (100) as claimed in claim 9, wherein, during the stroke, the controller (128) is configured to reference the pressure sensor to control the robotic arm (104) to maintain a minimum downward pressure on the scoop (113).

11. A system (100) as claimed in claim 1, wherein the controller (128) records each stroke to record real-time ice cream content topography data and wherein the controller (128) lowers the scoop mechanism (105) according to the ice cream content topography data.

12. A system (100) as claimed in claim 1, wherein the length of the stroke is configured according to the interior volume (120) of the scoop (113) such that the interior volume (120) is filled with ice cream at the opposing inner side wall surface (158).

13. A system (100) as claimed in claim 1, wherein the controller (128) records each stroke to record real-time ice cream content topography data and wherein the controller (128) adjacently positions the scoop mechanism (105) according to the ice cream content topography data.

14. A system (100) as claimed in claim 1, wherein the system (100) comprises a rotating cassette (109) of containers (107) and wherein the controller (128) is configured for rotating the cassette (109) according to the order.

15. A system (100) as claimed in claim 14, wherein the cassette (109) is housed within a bin (106) and wherein the bin (106) comprises a lid (110) and a lid actuator (143) and wherein the controller (128) is configured for rotating the cassette (109) according to the order to position one of the containers (107) beneath the lid (110) and to actuate the lid actuator (143) to open the lid (110).

16. A system (100) as claimed in claim 14, wherein the system (100) further comprises a further rotating cassette (109) of containers (107) and wherein the robotic arm (104) is able to travel along a rail (111) and wherein the controller (128) is configured for positioning the robotic arm (104) along the rail (111) to access the rotating cassette (109) and the further rotating cassette (109).

17. A system (100) as claimed in claim 1, wherein the scoop mechanism (105) comprises a rack and pinion (117), a pinion (166) thereof being connected to the wiper (124) and an aperture (164) through which a slider rod is slidably retained and which bears against a bearing face of a rack of the rack and pinion (117) to oppose a biasing spring (167) and which extends from the aperture (164) such that, in use, when the scoop mechanism (105) is moved to press a distal end of the slider rod against a surface, the slider rod slides into the aperture (164), thereby deflecting the rack (168), causing the pinion (166) to rotate to move the wiper (124).

## Patentansprüche

1. Ein Selbstbedienungskiosksystem (100), umfassend eine Steuerung (128), die eine Auftragskonfigurationsschnittstelle (103) bildet, und ein Schaufelteilsystem, das einen Roboterarm (104) mit einem Schaufelmechanismus (105) an einem distalen Ende davon umfasst, wobei der Schaufelmechanismus (105) eine Schaufel (113) umfasst, die ein Innenvolumen (120) definiert, wobei die Schaufel (113) einen koplanaren Rand (119) um das Innenvolumen (120) umfasst, und wobei die Steuerung (128) im Gebrauch dazu konfiguriert ist, den Roboterarm zu steuern (104), um den Schaufelmechanismus (105) in Bezug auf einen Eiscremebehälter (107) in Übereinstimmung mit einer Reihenfolge zu positionieren, die über die Auftragskonfigurationsschnittstelle (103) empfangen wird, den Schaufelmechanismus (105) in den Eiscremebehälter (107) zu bewegen, die Schaufel (113) über den Eiscremebehälter (107) zu bewegen, bis der koplanare Rand (119) flach gegen eine gegenüberliegende innere Seitenwandfläche (158) des Behälters (107) aufschlägt, um dadurch ein festes Volumen von Eiscreme zwischen der inneren Seitenwandfläche (158) und dem inneren der Schaufel (113) einzuschließen, die Schaufel (113) anzuheben, um den koplanaren Rand (119) auf der gegenüberliegenden inneren Seitenwandfläche (158) zu wischen, um das feste Volumen von Eiscreme aus dem Eiscremebehälter (107) herauszuziehen und die Schaufel (113) in Bezug auf ein Fach zu positionieren, um das feste Volumen von Eiscreme darin abzulegen, wobei der Schaufelmechanismus (105) ferner einen Wischer (124) umfasst, der über eine Innenfläche der Schaufel (113) bewegbar ist, wobei der Schaufelmechanismus (105) ferner konfiguriert ist, um den Wischer (124) zu betätigen, um das feste Volumen von Eiscreme von der Schaufel (113) in das Fach zu entfernen.

2. System (100) nach Anspruch 1, wobei die innere Oberfläche der Schaufel (113) halbzylindrisch ist, und wobei der Wischer (124) eine Krümmung aufweist und sich zwischen oberen und unteren Drehpunkten (126,125) über die innere Oberfläche der Schaufel (113) dreht.

3. System (100) nach Anspruch 2, wobei der Schaufelmechanismus (105) einen Hals (118) mit der Schaufel (113) an einem distalen Ende davon umfasst, und wobei der Schaufelmechanismus (105) eine Antriebswelle (163) entlang des Halses (118) zum oberen Drehpunkt (126) umfasst.

4. System (100) nach Anspruch 1, wobei der Rand (119) eine horizontale gerade untere Kante (121) umfasst.

5. System (100) nach Anspruch 4, wobei die Schaufel (113) eine nach oben gerichtete Krümmung (123) nach hinten von der horizontalen geraden unteren Kante (121) umfasst.

6. System (100) nach Anspruch 4, wobei der Rand (119) Seitenkanten (122) senkrecht zur unteren Kante (121) umfasst.

7. System (100) nach Anspruch 1, wobei der Schaufelmechanismus (105) einen Hals (118) umfasst, der die Schaufel (113) an einem distalen Ende davon aufweist, und wobei der koplanare Rand (119) von einer benachbarten Kante des Halses (118) entfernt ist.

8. System (100) nach Anspruch 7, wobei der koplanare Rand (119) in einer Ebene liegt, die parallel zu einer länglichen Achse des Halses (118) ist.

9. System (100) nach Anspruch 1, wobei der Roboterarm (104) einen Drucksensor umfasst, und wobei die Steuerung (128) zum Absenken des Schaufelmechanismus (105) so lange konfiguriert ist, dass der Drucksensor anzeigt, dass die Schaufel (113) eine obere Oberfläche (160) der Eiscreme innerhalb des Eiscremebehälters berührt.

10. System (100) nach Anspruch 9, wobei die Steuerung (128) während des Hubs konfiguriert ist, um den Drucksensor zu referenzieren, um den Roboterarm (104) zu steuern, um einen minimalen Abwärtsdruck auf der Schaufel (113) aufrechtzuerhalten.

11. System (100) nach Anspruch 1, wobei die Steuerung (128) jeden Hub aufzeichnet, um Echtzeit-Eiscremeinhalt-Topographiedaten aufzuzeichnen, und wobei die Steuerung (128) den Schaufelmechanismus (105) gemäß den Eiscremeinhalt-Topographiedaten absenkt.

12. System (100) nach Anspruch 1, wobei die Länge des Hubs gemäß dem Innenvolumen (120) der Schaufel (113) so konfiguriert ist, dass das Innenvolumen (120) mit Eiscreme an der gegenüberliegenden inneren Seitenwandfläche (158) gefüllt ist.

13. System (100) nach Anspruch 1, wobei die Steuerung (128) jeden Hub aufzeichnet, um Echtzeit- Eiscremeinhalt-Topographiedaten aufzuzeichnen, und wobei die Steuerung (128) den Schaufelmechanismus (105) gemäß den Eiscremeinhalt-Topographiedaten benachbart positioniert.

14. System (100) nach Anspruch 1, wobei das System (100) eine rotierende Kassette (109) von Behältern (107) umfasst, und wobei die Steuerung (128) konfiguriert ist, um die Kassette (109) gemäß der Reihenfolge zu drehen.

15. System (100) nach Anspruch 14, wobei die Kassette (109) in einem Kasten (106) untergebracht ist, und wobei der Kasten (106) einen Deckel (110) und einen Deckelaktuator (143) umfasst, und wobei die Steuerung (128) konfiguriert ist, um die Kassette (109) gemäß der Reihenfolge zu drehen, um einen der Behälter (107) unter dem Deckel (110) zu positionieren und den Deckelaktuator (143) zu betätigen, um den Deckel (110) zu öffnen.

16. System (100) nach Anspruch 14, wobei das System (100) ferner eine weitere rotierende Kassette (109) von Behältern (107) umfasst, und wobei der Roboterarm (104) in der Lage ist, sich entlang einer Schiene (111) zu bewegen, und wobei die Steuerung (128) konfiguriert ist, um den Roboterarm (104) entlang der Schiene (111) zu positionieren, um auf die rotierende Kassette (109) und die weitere rotierende Kassette (109) zuzugreifen.

17. System (100) nach Anspruch 1, wobei der Schaufelmechanismus (105) eine Zahnstange und ein Ritzel (117) umfasst, wobei ein Ritzel (166) davon mit dem Wischer (124) und einer Öffnung (164) verbunden ist, durch die eine Schieberstange verschiebbar gehalten ist und die an einer Lagerfläche einer Zahnstange der Zahnstange und des Ritzels (117) anliegt, um einer Vorspannfeder (167) entgegenzuwirken, und die sich von der Öffnung (164) erstreckt, so dass, wenn der Schaufelmechanismus (105) bewegt wird, um ein distales Ende der Schieberstange gegen eine Oberfläche zu drücken, die Schieberstange in die Öffnung (164) gleitet, wodurch die Zahnstange (168) abgelenkt wird, wodurch bewirkt wird, dass sich das Ritzel (166) dreht, um den Wischer (124) zu bewegen.

## Revendications

1. Système de kiosque autonome (100) comprenant un dispositif de commande (128) interfaçant une interface de configuration de commande (103) et un sous-système de pelle comprenant un bras robotique (104) ayant un mécanisme de pelle (105) au niveau d'une extrémité distale de celui-ci, le mécanisme de pelle (105) comprenant une pelle (113) définissant un volume intérieur (120), la pelle (113) comprenant un rebord coplanaire (119) autour du volume intérieur (120) et dans lequel, lors de l'utilisation, le dispositif de commande (128) est configuré pour commander le bras robotique (104) pour positionner le mécanisme de pelle (105) par rapport à un récipient de crème glacée (107) conformément à un ordre reçu par l'intermédiaire de l'interface de configuration de commande (103), pour abaisser le mécanisme de pelle (105) dans le récipient de crème glacée (107), pour faire passer la pelle (113) à travers le récipient de crème glacée (107) jusqu'à ce que le rebord coplanaire (119) frappe à plat contre une surface de paroi latérale interne opposée (158) du récipient (107) emprisonnant ainsi un volume fixe de crème glacée entre la surface de paroi latérale interne (158) et l'intérieur de la pelle (113), pour soulever la pelle (113) pour essuyer le rebord coplanaire (119) vers le haut de la surface de paroi latérale interne opposée (158) pour retirer le volume fixe de crème glacée du récipient de crème glacée (107) et pour positionner la pelle (113) par rapport à un réceptacle pour déposer le volume fixe de crème glacée à l'intérieur de celui-ci, dans lequel le mécanisme de pelle (105) comprend en outre un racleur (124) mobile à travers une surface interne de la pelle (113) et dans lequel le dispositif de commande (128) est en outre configuré pour actionner le racleur (124) pour déloger le volume fixe de crème glacée de la pelle (113) dans le réceptacle.

2. Système (100) selon la revendication 1, dans lequel la surface intérieure de la pelle (113) est semi-cylindrique et dans lequel le racleur (124) a une courbure et tourne entre des points de pivotement supérieur et inférieur (126, 125) à travers la surface intérieure de la pelle (113).

3. Système (100) selon la revendication 2, dans lequel le mécanisme de pelle (105) comprend un col (118) ayant la pelle (113) au niveau d'une extrémité distale de celui-ci et dans lequel le mécanisme de pelle (105) comprend un arbre d'entraînement (163) le long du col (118) jusqu'au point de pivotement supérieur (126).

4. Système (100) selon la revendication 1, dans lequel le rebord (119) comprend un bord inférieur droit horizontal (121).

5. Système (100) selon la revendication 4, dans lequel la pelle (113) comprend une courbure vers le haut (123) vers l'arrière à partir du bord inférieur droit horizontal (121).

6. Système (100) selon la revendication 4, dans lequel le rebord (119) comprend des bords latéraux (122) perpendiculaires au bord inférieur (121).

7. Système (100) selon la revendication 1, dans lequel le mécanisme de pelle (105) comprend un col (118) ayant la pelle (113) au niveau d'une extrémité distale de celui-ci et dans lequel le rebord coplanaire (119) est éloigné d'un bord adjacent du col (118).

8. Système (100) selon la revendication 7, dans lequel le rebord coplanaire (119) se trouve dans un plan parallèle à un axe allongé du col (118).

9. Système (100) selon la revendication 1, dans lequel le bras robotique (104) comprend un capteur de pression et dans lequel le dispositif de commande (128) est configuré pour abaisser le mécanisme de pelle (105) jusqu'à ce que le capteur de pression indique que la pelle (113) entre en contact avec une surface supérieure (160) de la crème glacée à l'intérieur du récipient de crème glacée.

10. Système (100) selon la revendication 9, dans lequel, pendant la course, le dispositif de commande (128) est configuré pour référencer le capteur de pression pour commander le bras robotique (104) pour maintenir une pression vers le bas minimale sur la pelle (113).

11. Système (100) selon la revendication 1, dans lequel le dispositif de commande (128) enregistre chaque course pour enregistrer des données de topographie de contenu de crème glacée en temps réel et dans lequel le dispositif de commande (128) abaisse le mécanisme de pelle (105) selon les données de topographie de contenu de crème glacée.

12. Système (100) selon la revendication 1, dans lequel la longueur de la course est configurée selon le volume intérieur (120) de la pelle (113) de sorte que le volume intérieur (120) soit rempli de crème glacée au niveau de la surface de paroi latérale intérieure opposée (158).

13. Système (100) selon la revendication 1, dans lequel le dispositif de commande (128) enregistre chaque course pour enregistrer des données de topographie de contenu de crème glacée en temps réel et dans lequel le dispositif de commande (128) positionne de manière adjacente le mécanisme de pelle (105) selon les données de topographie de contenu de crème glacée.

14. Système (100) selon la revendication 1, dans lequel le système (100) comprend une cassette rotative (109) de récipients (107) et dans lequel le dispositif de commande (128) est configuré pour faire tourner la cassette (109) selon l'ordre.

15. Système (100) selon la revendication 14, dans lequel la cassette (109) est logée à l'intérieur d'un bac (106) et dans lequel le bac (106) comprend un couvercle (110) et un actionneurde couvercle (143) et dans lequel le dispositif de commande (128) est configuré pour faire tourner la cassette (109) selon l'ordre pour positionner l'un des récipients (107) sous le couvercle (110) et pour actionner l'actionneur de couvercle (143) pour ouvrir le couvercle (110).

16. Système (100) selon la revendication 14, dans lequel le système (100) comprend en outre une autre cassette rotative (109) de récipients (107) et dans lequel le bras robotique (104) est capable de se déplacer le long d'un rail (111) et dans lequel le dispositif de commande (128) est configuré pour positionner le bras robotique (104) le long du rail (111) pour accéder à la cassette rotative (109) et à l'autre cassette rotative (109).

17. Système (100) selon la revendication 1, dans lequel le mécanisme de pelle (105) comprend une crémaillère et un pignon (117), un pignon (166) de celui-ci étant relié au racleur (124) et une ouverture (164) à travers laquelle une tige coulissante est retenue de manière coulissante et qui s'appuie contre une face d'appui d'une crémaillère de la crémaillère et pignon (117) pour s'opposer à un ressort de sollicitation (167) et qui s'étend à partir de l'ouverture (164) de telle sorte que, lors de l'utilisation, lorsque le mécanisme de pelle (105) est déplacé pour presser une extrémité distale de la tige coulissante contre une surface, la tige coulissante coulisse dans l'ouverture (164), déviant ainsi la crémaillère (168), amenant le pignon (166) à tourner pour déplacer le racleur (124).
